Europäisches Patentamt

European Patent Office

Office européen des brevets

(19)

(11) Veröffentlichungsnummer: **0 288 013**
**A1**

## EUROPÄISCHE PATENTANMELDUNG

(21) Anmeldenummer: 88106234.3

(22) Anmeldetag: 19.04.88

(51) Int. Cl.⁴ **H02J 7/10 , H01M 10/44**

(30) Priorität: 21.04.87 DE 3713391

(43) Veröffentlichungstag der Anmeldung:
26.10.88 Patentblatt 88/43

(84) Benannte Vertragsstaaten:
**AT BE CH DE FR GB IT LI LU NL SE**

(71) Anmelder: **Siemens Aktiengesellschaft Berlin und München**
**Wittelsbacherplatz 2**
**D-8000 München 2(DE)**

(72) Erfinder: **Krings, Gert, Dipl.-Ing.**
**Linienstrasse 75**
**D-8024 Deisenhofen(DE)**
Erfinder: **Heuwieser, Erwin, Dipl.-Ing.**
**Ludwig-Thoma-Strasse 57**
**D-8013 Haar(DE)**
Erfinder: **Unterberger, Hans, Dipl.-Ing.**
**Karl-Theodor-Strasse 54**
**D-8000 München 40(DE)**
Erfinder: **Wetzel, Klaus**
**Schwingensteinweg 14**
**D-8000 München 83(DE)**

(54) **Vorrichtung zum Laden eines Akkumulators.**

(57) Beim Laden von Akkumulatoren (1) mit konstanter Ladestromstärke tritt das Problem auf, daß der Akkumulator (1) bei geringer Entladung lebendauervermindernd überladen werden kann bzw. nach vorhergehender starker Entladung viel zu spät wieder voll aufgeladen ist, da der Ladestrom zu gering ist. Der Ladestrom wird deshalb abhängig vom Lade- bzw. Entladezustand geregelt. Dazu dient eine Steuerlogik (8) mit einem Stellglied (9) zur Einstellung der Ladestromstärke. Die Steuerlogik (8) ist zugleich mit einem Stromfühler (10) zur Erfassung des Ladestromes verbunden.

FIG 1

## Vorrichtung zum Laden eines Akkumulators

Die Anmeldung bezieht sich auf eine Vorrichtung zum Laden eines Akkumulators mit einem Anschlußklemmen aufweisenden Ladegerät, und mit einem Stromfühler zur Erfassung des über die Anschlußklemmen fließenden Ladestromes, und mit einem Taktimpulse erzeugenden Taktgenerator, und mit einem für Vorwärts-und Rückwärtszählung umschaltbaren Impulszähler, dessen Zählrichtung bei Ladestromfluß, also beim Aufladen des Akkumulators eine Richtung und bei keinem Ladestromfluß, also beim Entladen, die andere Richtung ist.

Eine solche Vorrichtung ist z.B. in der DE-OS 29 02 334 beschrieben. Dort ist von einem Ladegerät die Rede, das mit einem Kontrollgerät verbunden ist. Dieses Kontrollgerät erlaubt es, den Ladezustand des zu ladenden Akkumulators zu überwachen. Dazu weist das Kontrollgerät einen Stromfühler auf, der feststellt, ob an den Akkumulator das Ladegerät oder ein Verbraucher angeschlossen ist, d.h. ob ein Ladestrom fließt oder ob ein Entladestrom fließt. Abhängig von der Stromrichtung des Akkumulators wird ein Impulszähler auf-oder abwärts gezählt. Der Zählstand dieses Impulszählers ist dort also proportional zum Lade-bzw. Entladezustand des Akkumulators. Mit dieser Vorrichtung ist es anhand des Zählerstandes möglich festzustellen, ob der Akkumulator völlig entladen oder aufgeladen ist.

Der Nachteil dieser Vorrichtung liegt darin, daß der Akkumulator mit konstantem Ladestrom aufgeladen wird. Ist dieser Ladestrom zu niedrig, so erreicht der Akkumulator seine volle Einsatzbereitschaft erst nach langer Zeit. Außerdem hat diese Vorrichtung den Nachteil, daß es nicht möglich ist, gegen Ende des Ladevorganges den Ladestrom zu verringern, um so die volle Ladekapazität einer Akkumulatorzelle auszunutzen.

Der vorliegenden Erfindung liegt die Aufgabe zugrunde, eine Vorrichtung zum Laden von Akkumulatoren anzugeben, bei dem abhängig vom Lade-bzw. Entladezustand des Akkumulators der Ladestrom einstellbar ist.

Diese Aufgabe wird dadurch gelöst, daß die Vorrichtung eine Steuerlogik mit einem Stellglied zur Einstellung der Ladestromstärke aufweist, daß die Steuerlogik mit dem Stromfühler und dem Impulszähler und dem Taktgenerator in Verbindung steht, daß die Steuerlogik Mittel enthält, den Zähltakt für den Impulszähler abhängig von der vom Stromfühler erfaßten Ladestromstärke einzustellen, und daß die Steuerlogik Mittel enthält, abhängig vom Impulszählerstand das Stellglied einzustellen.

Weiterbildungen der Erfindung sind Gegenstand der Unteransprüche.

Mit dieser Vorrichtung kann also erreicht werden, daß bei einer hohen Entladung des Akkumulators der Ladestrom hoch eingestellt wird, um so schnell die Betriebsbereitschaft zu erreichen. Andererseits kann bei geringer Entladung des Akkumulators der Ladestrom niedrig eingestellt werden, um so eine Überladung und damit eine Lebensdauerverkürzung des Akkumulators zu vermeiden. Außerdem kann bei normalem Ladeverlauf der Ladestrom gegen Ende der Aufladung verringert werden, so daß die volle Ladekapazität der Akkumulatorzellen ausgenutzt werden kann.

Die Erfindung wird im folgenden anhand von Figuren näher erläutert. Es zeigen:

FIG 1 Blockschaltbild einer erfindungsgemäßen Vorrichtung mit Steuerlogik,

FIG 2 Funktionsablaufdiagramm der Steuerlogik und

FIG 3 erfindungsgemäße Vorrichtung am Beispiel eines schnurlosen Telefons.

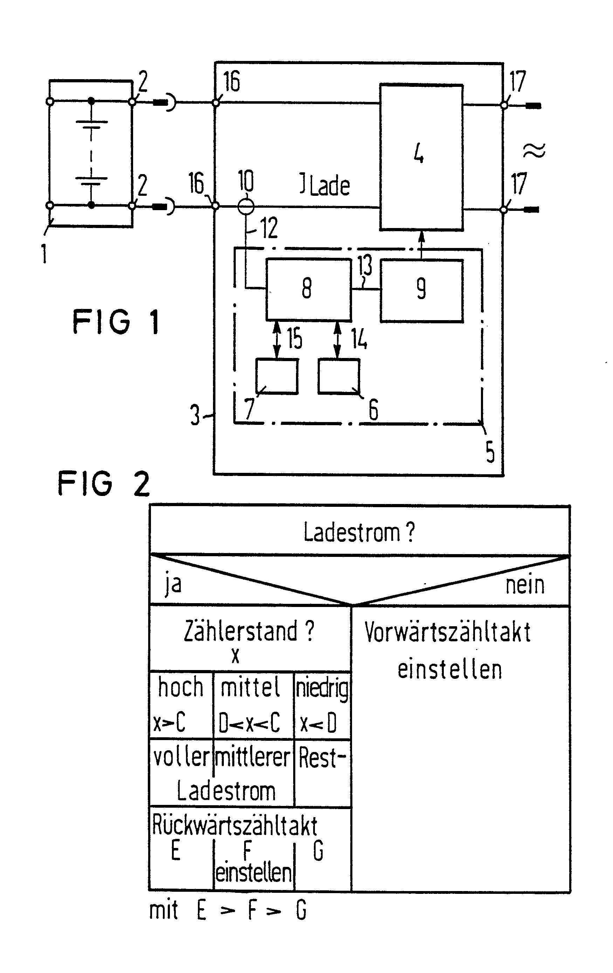

In FIG 1 ist ein zu ladender Akkumulator 1 und die Vorrichtung 3 zum Laden dieses Akkumulators als Blockschaltbild dargestellt. Der zu ladende Akkumulator 1 ist mit seinen Anschlußklemmen 2 an die Anschlußklemmen 16 dieser Vorrichtung 3 anschließbar.

Die Vorrichtung 3 zum Laden des Akkumulators 1 enthält ein Ladegerät 4, das mit den Anschlußklemmen 16 verbunden ist. Außerdem ist dieses Ladegerät 4 noch mit weiteren Anschlußklemmen 17 versehen, die zum Anlegen der Spannungsversorgung vorgesehen sind. Neben dem Ladegerät 4 ist in der Vorrichtung 3 zum Laden des Akkumulators 1 noch eine Steuereinrichtung 5 vorgesehen. Diese Steuereinrichtung 5 enthält einen Taktimpulse erzeugenden Taktgenerator 6, einen für Vorwärts-und Rückwärtszählung umschaltbaren Impulszähler 7, eine Steuerlogik 8, ein Stellglied 9 und einen Stromfühler 10 zur Erfassung des über die Anschlußklemmen 16 fließenden Ladestromes. Die Steuerlogik 8 ist mit dem Stromfühler 10, dem Stellglied 9, dem Impulszähler 7 und dem Taktgenerator 6 über Verbindungsleitungen 12, 13, 15 und 14 verbunden. Das Stellglied 9 ist in der Vorrichtung 3 derart angeordnet, daß die Ladestromstärke des Ladegerätes 4 variiert werden kann.

Die Steuerlogik 8 enthält Mittel, den Zähltakt für den Impulszähler 7 abhängig von der vom Stromfühler 10 erfaßten Ladestromstärke einzustellen. Außerdem enthält die Steuerlogik 8 noch weitere Mittel, abhängig vom Impulszählerstand des Impulszählers 7 das Stellglied 9 einzustellen.

Die Funktionsweise der Vorrichtung 3 zum Laden des Akkumulators 1 sei im folgenden erläutert. Dabei wird jetzt als Beispiels davon ausgegangen, daß der Impulszähler 7 beim Aufladen des Akkumulators 1, also bei einem Ladestromfluß vorwärts zählt und bei keinem Ladestromfluß, also beim Entladen des Akkumulators rückwärts zählt. Dies kann selbstverständlich auch umgekehrt gewählt werden.

In FIG 2 ist zum besseren Verständnis der Wirkungsweise der Vorrichtung 3 ein Flußdiagramm der Arbeitsweise der Vorrichtung 3 dargestellt. Zunächst wird über den Stromfühler 10 festgestellt, ob Ladestrom fließt. Fließt kein Ladestrom, so heißt das, daß der Akkumulator nicht an das Ladegerät angeschlossen ist und sich im Entladezustand befindet, d.h. also, daß er an einen Verbraucher angeschlossen ist. Über die Steuerlogik 8 wird der Im pulszähler 7 in Vorwärtszählrichtung geschaltet und mit einem bestimmten Zähltakt beaufschlagt.

Fließt dagegen ein Ladestrom, so ist der Akkumulator 1 mit seinen Anschlußklemmen 2 an die Anschlußklemmen 16 der Vorrichtung 3 zum Laden bzw. Nachladen angeschlossen. Die Steuerlogik 8 frägt den Zählerstand des Impulszählers 7 ab. Je nachdem, welchen Zählerstand der Impulszähler enthält, der z.B. ein Dual-oder Dezimalzähler sein kann, wird das Stellglied 9 zur Einstellung des Ladestromes angesteuert. Ist der Zählerstand hoch, so wird ein voller Ladestrom eingestellt, ist dagegen der Zählerstand klein, so wird nur ein Restladestrom eingestellt. Dieser Ladestrom kann - je nach Zählerstand - entweder kontinuierlich oder in Schritten eingestellt werden. In FIG 2 ist z.B. die Möglichkeit angegeben, den Ladestrom in drei Stufen einzustellen. Ist der Zählerstand $X$ größer als ein bestimmter Wert $C$, so wird der volle Ladestrom eingestellt. Ist der Zählerstand $X$ kleiner als dieser Wert $C$, jedoch größer als ein bestimmter vorgegebener Wert $D$, so wird ein mittlerer Ladestrom eingestellt. Ist der Zählerstand auch kleiner wie dieser Wert $D$, so wird nur der Restladestrom eingestellt. Proportional dem durch das Stellglied 9 eingestellten Ladestrom wird ein Rückwärtszähltakt gebildet und über die Steuerlogik 8 der Impulszähler 7 entsprechend rückwärts gezählt. In dem nach FIG 2 gezeigten Beispiel sind drei unterschiedliche Zähltakte vorgesehen, nämlich $E$, $F$ und $G$, wobei gilt $E > F > G$. Der Rückwärtszähltakt $E$ wird also dann eingestellt, wenn der volle Ladestrom über die Klemmen 16 fließt. Da während des Ladevorganges der aktuelle Zählerstand verglichen wird, ändert sich die Ladestromstärke auf kleinere Werte während des Ablaufes.

Wenn die Verbrauchs-und Ladeströme sowie der Akkumulatorwirkungsgrad nicht genau aufeinander abgestimmt sind, kann sich bei mehreren Teilent-bzw. -aufladungen hintereinander eine Unsynchronität zwischen Zählerstand und Ladezustand einstellen. Es ist daher zweckmäßig, den Zählerbereich nicht zu groß zu so daß sich ein maximaler Zählerstand bereits vor der völligen Entladung einstellt und der Zählerwert 0 sich erst bei einem sicheren Aufladestromintegral ergibt. Eine zusätzliche Sicherheit bietet z.B. eine Spannungswertüberwachung Wird der leere Akkumulator an das Ladegerät angeschlossen, so kann über eine zusätzliche Klemmenspannungsmeßeinrichtung der Impulszähler 7 auf seinen maximalen Zählerstand gestellt werden.

Außerdem ist es bei einer erfindungsgemäßen Weiterbildung der Erfindung vorgesehen. daß ein Temperaturfühler mit der Steuerlogik in Verbindung steht, und daß die Steuerlogik 8 Mittel zur temperaturabhängigen Korrektur der Ladestromstärke enthält. Außerdem sind in der Steuerlogik 8 Mittel enthalten, die bei einer maximal vorgegebenen ununterbrochenen Ladezeit den Ladestrom abschalten.

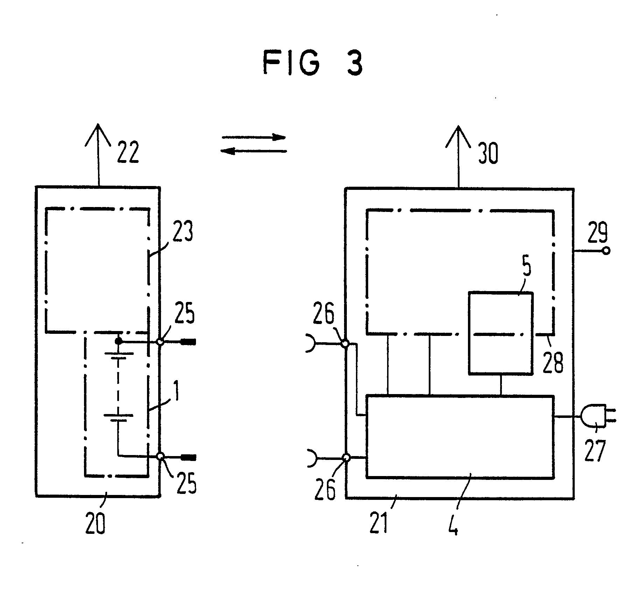

In FIG 3 ist ein schnurloses Telefon dargestellt, daß aus einem tragbaren Hörer 20 und einem Telefongrundgerät 21 besteht. Der Hörer 20 weist im wesentlichen eine Antenne 22, eine Sende-und Empfangseinrichtung 23 und einen Akkumulator 1 auf. Der Hörer 20 weist Anschlußklemmen 25 auf, die mit dem Akkumulator 1 verbunden sind. An diesen Akkumulator 1 ist die Sende-und Empfangseinrichtung 23 angeschlossen.

Das Telefongrundgerät 21 hat ein Ladegerät 4 mit Netzanschluß 27, eine Steuereinrichtung 5 und eine Sende-und Empfangseinrichtung 28. Außerdem weist dieses Telefongrundgerät 21 noch eine Antenne 30 auf, die mit der Sende-und Empfangseinrichtung 28 verbunden ist. Außerdem ist das Telefongrundgerät 21 noch mit einem Anschluß 29 verbunden, der an das Telefonnetz angeschlossen ist. Die Vorrichtung zum Laden des Akkumulators 1 im Hörer 20 entspricht der in FIG 1 bzw. FIG 2 dargestellten Vorrichtung. Der Akkumulator 1 ist jetzt zusätzlich mit der Sendeeinrichtung 23 verbunden. Je nachdem, ob sich der Hörer im Sprech-oder Hörbetrieb befindet, wird ein unterschiedliches Signal gesendet. Die Steuerlogik in der Steuereinrichtung 5 des Telefongrundgerätes 21 ist mit der Sende-und Empfangseinrichtung 28 verbunden. Die Steuereinrichtung 5 ist in der Lage, das Signal zu detektieren und festzustellen, ob der Hörer 20 im Sprech-oder im Hörbetrieb arbeitet. Je nach erkanntem Zustand wird der Impulszähler mit einem unterschiedlichen Takt vorwärtsgezählt. Die unterschiedliche Taktfrequenz ist proportional der Verbrauchsstromstärke des Hörers, also im Sprechbetrieb eine höherer Zähltakt als im Hörbetrieb.

Wird der Hörer 20 wieder auf das Telefongrundgerät 21 aufgelegt, d.h. also daß die Anschlußklemmen 25 des Hörers 20 und damit des Akkumulators 1 an die Anschlußklemmen des Ladegerätes 4 im Telefongrundgerät 21 angeschlossen sind, so wird der Akkumulator 1 des Hörers 20 entsprechend des entnommenen Stromintegrals wieder nachgeladen. Mit welcher Stromstärke nachgeladen wird, entscheidet - wie im Zusammenhang mit den anderen Figuren bereits dargelegt - die Steuerlogik aus dem Zählerstand des Impulszählers. Dabei bedeutet ein hoher Zählerstand einen hohen Ladestrom und ein niedriger Zählerstand einen niedrigen Ladestrom. Proportional dem Ladestrom wird ein Rückwärtstakt gebildet, der den Impulszähler während des Ladevorganges wieder rückwärtszählt. D.h. also, daß die Sendeeinrichtung im Hörer 20 zur Aussendung eines als Maß für die Entladestromstärke dienendes Signal vorgesehen ist, und daß die Steuerlogik Mittel zur Signalauswertung enthält und abhängig davon den Zähltakt einstellt. Ansonsten kann auf das im Zusammenhang mit den FIG 1 und 2 Gesagte verwiesen werden. Die Steuerlogik in dieser Vorrichtung zum Laden von Akkumulatoren kann auch durch einen Mikrorechner oder einen Teil eines Mikrorechners ersetzt werden. Moderne Microcontroller verfügen z.B. auch über Zähler, so daß schließlich die gesamte Steuereinrichtung auch mit einem Microcontroller ausgeführt sein kann.

Es bleibt hier anzumerken, daß die Wahl und die Art des Ladegerätes im wesentlichen von den tatsächlichen Ladespannungen und -strömen abhängt. Außerdem ist der Typ des Akkumulators ausschlaggebend. Die Ladestromstärke muß jedoch von der Steuereinrichtung einstellbar sein. Ein 2-oder 3-Bitsignal aus der Steuereinrichtung kann die Ladestromstärke z.B. in vier oder acht Stufen verändern.

**Ansprüche**

1. Vorrichtung zum Laden eines Akkumulators mit einem Anschlußklemmen (16) aufweisenden Ladegerät (4), und mit einem Stromfühler (10) zur Erfassung des über die Anschlußklemmen (16) fließenden Ladestromes, und mit einem Taktimpulse erzeugenden Taktgenerator (6), und mit einem für Vorwärts-und Rückwärtszählung umschaltbaren Impulszähler (7), dessen Zählrichtung bei Ladestromfluß, also beim Aufladen des Akkumulators (1), eine Richtung und bei keinem Ladestromfluß, also beim Entladen des Akkumulators (1), die andere Richtung ist, **dadurch gekennzeichnet,** daß die Vorrichtung eine Steuerlogik (8) mit einem Stellglied (9) zur Einstellung der Ladestromstärke aufweist, daß die Steuerlogik (8) mit dem Stromfühler (10) und dem Impulszähler (7) und dem Taktgenerator (6) in Verbindung steht, daß die Steuerlogik (8) Mittel enthält, den Zähltakt für den Impulszähler (7) abhängig von der vom Stromfühler (10) erfaßten Ladestromstärke einzustellen, und daß die Steuerlogik (8) Mittel enthält, abhängig vom Impulszählerstand das Stellglied (9) einzustellen.

2. Vorrichtung nach Anspruch 1, **dadurch gekennzeichnet,** daß ein Temperaturfühler vorgesehen ist, daß der Temperaturfühler mit der Steuerlogik (8) in Verbindung steht, und daß die Steuerlogik (8) Mittel zur temperaturabhängigen Korrektur der Ladestromstärke enthält.

3. Vorrichtung nach Anspruch 1 oder 2, **dadurch gekennzeichnet,** daß eine Klemmenspannungsmeßeinrichtung vorgesehen ist, daß diese Klemmenspannungsmeßeinrichtung mit der Steuerlogik (8) in Verbindung steht, und daß die Steuerlogik (8) Mittel zur klemmenspannungsabhängigen Einstellen des Zählerstandes enthält.

4. Vorrichtung nach einem der Ansprüche 1 bis 3, **dadurch gekennzeichnet,** daß die Steuerlogik (8) Mittel enthält, bei einer maximal vorgegebenen ununterbrochenen Ladezeit den Ladestrom abzuschalten.

5. Vorrichtung nach einem der Ansprüche 1 bis 4, **dadurch gekennzeichnet,** daß der maximale Zählerbereich des Impulszählers (7) derart gewählt ist, daß bereits vor völliger Entladung des Akkumulators (1) der maximale Zählerbereich erreicht ist.

6. Vorrichtung nach einem der Ansprüche 1 bis 5, **dadurch gekennzeichnet,** daß die Steuerlogik (8) ein Mikrorechner ist.

7. Vorrichtung nach einem der Ansprüche 1 bis 6, **dadurch gekennzeichnet,** daß der Akkumulator (1) mit einer Sendeeinrichtung (23) und die Steuerlogik (8) mit einer Empfangseinrichtung (29) verbunden sind, daß die Sendeeinrichtung (23) zur Aussendung eines als Maß für die Entladestromstärke dienendes Signal vorgesehen ist, daß die Steuerlogik (8) Mittel zur Signalauswertung enthält, und daß durch die Steuerlogik (8) der Zähltakt in Abhängigkeit von diesem Signal einstellbar ist.

8. Vorrichtung nach Anspruch 7, **dadurch gekennzeichnet,** daß die Sendeeinrichtung (23) und Empfangseinrichtung (29) Bestandteile eines - schnurlosen Telefones sind.

0 288 013

FIG 1

FIG 2

| Ladestrom ? | | | |
|---|---|---|---|
| ja | | | nein |
| Zählerstand ?<br>x | | | Vorwärtszähltakt<br><br>einstellen |
| hoch<br>$x > C$ | mittel<br>$D < x < C$ | niedrig<br>$x < D$ | |
| voller | mittlerer | Rest- | |
| Ladestrom | | | |
| Rückwärtszähltakt<br>E | F<br>einstellen | G | |

mit $E > F > G$

# FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 049 047 (LICENTIA PATENT-VERWALTUNGS-GmbH) * Seite 7, Zeile 33 - Seite 14, Zeile 13; Figur 1 * | 1-3 | H 02 J 7/10 H 01 M 10/44 |
| A | --- | 5 | |
| Y | WO-A-8 607 502 (FORD FRANCE S.A.) * Seite 6, Zeile 10 - Seite 9, Zeile 31; Ansprüche 7,9 * | 1-3,6 | |
| A | EP-A-0 069 640 (SOCIETE SAPHYMO-STEL) * Seite 8, Zeile 18 - Seite 13, Zeile 32; Zusammenfassung * | 1,3-5,7 | |
| A | EP-A-0 124 739 (CEAG GmbH) * Seite 4, Zeile 2 - Seite 6, Zeile 13; Figur 1 * | 1,3,4 | |
| A | EP-A-0 218 482 (NEC CORP.) * Seite 5, Zeile 24 - Seite 9, Zeile 6; Anspruch 9; Figur 1 * | 1,6,7 | |
| A | FR-A-2 258 012 (AKKUMULATORENFABRIK DR. LEOPOLD JUNGFER) * Ansprüche 1,8 * | 1,2 | RECHERCHIERTE SACHGEBIETE (Int. Cl.4) H 02 J H 01 M H 04 M |
| A,D | DE-A-2 902 334 (SIEMENS AG) * Seite 8, Zeile 10 - Seite 11, Zeile 7 * | 1,2 | |

Der vorliegende Recherchenbericht wurde für alle Patentansprüche erstellt

| Recherchenort | Abschlußdatum der Recherche | Prüfer |
|---|---|---|
| DEN HAAG | 06-06-1988 | FOURRICHON,P.M.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)